# EUROPÄISCHE PATENTSCHRIFT

(11) **EP 0 336 510 B1**
(45) Veröffentlichungstag und Bekanntmachung des Hinweises auf die Patenterteilung: **15.06.1994**
(21) Anmeldenummer: 89200829.3
(22) Anmeldetag: 31.03.1989
(51) Int. Cl.: H04N 7/137

(54) **Prädiktiver Standbildcodierer**
Predictive still-image encoder
Codeur predictif d'image immobile

(30) Priorität: 06.04.1988 DE 3811536
(43) Veröffentlichungstag der Anmeldung: 11.10.1989
(73) Patentinhaber: Philips Patentverwaltung GmbH, 22335 Hamburg (DE); Philips Electronics N.V., 5621 BA Eindhoven (NL)
(72) Erfinder: Hienerwadel, Klaus, D-8500 Nürnberg (DE); Weth, Gerald, Dipl.-Ing., D-8500 Nürnberg 80 (DE)
(74) Vertreter: Peuckert, Hermann, Dipl.-Ing.

(56) Entgegenhaltungen:
- DE-A- 3 613 343
- US-A- 4 672 441
- US-A- 4 745 474

## Beschreibung

Die Erfindung betrifft einen prädiktiven Standbildcodierer mit einem Quantisierer, dessen Kennlinie veränderbar ist, mit einem Ausgangspuffer, aus dem die codierten Bilddaten mit konstanter Bitrate ausgelesen und übertragen werden, sowie mit einem Subtrahierer und einem Bildspeicher für die Gewinnung von Prädiktionswerten.

Aus der DE 36 13 343 A1 ist ein Hybrid-Codierer für Videosignale bekannt, bei dem die Daten eines Videobildes durch eine Vorverarbeitungseinheit in gleich große Datenblöcke unterteilt werden. Jeder Datenblock enthält die Daten eines quadratischen Bildausschnittes mit 64 Bildpunkten. So kann ein Datenblock z.B. aus den Chrominanzwerten der ersten 8 Bildpunkte der ersten 8 Zeilen eines Videobildes bestehen. Durch die Vorverarbeitungseinheit wird auch jedem Datenblock eine Kennung zugeordnet, die die Stellung des Blockes innerhalb eines Videobildes angibt. Datenblöcke von aufeinanderfolgenden Videobildern, die die gleiche Kennung haben, werden hier als sich entsprechende Datenblöcke bezeichnet. Jeder Datenblock wird mit dem entsprechenden Datenblock des vorangegangenen Videobildes durch einen Subtrahierer verglichen. Der entsprechende Datenblock des vorangegangenen Videobildes liegt am Ausgang eines ersten Bildspeichers an. Der durch den Subtrahierer gewonnene Differenzblock wird in einer ersten Operationseinheit einer Matrix-Transformation (die Datenblöcke werden wie quadratische Zahlenmatritzen behandelt) unterworfen. Diese Transformation wird in einem Rückkopplungsweg durch eine zweite Operationseinheit rückgängig gemacht und der zurückgewonnene Differenzblock einem ersten Eingang eines Addierers zugeführt. Der zweite Eingang des Addierers ist mit dem Ausgang des ersten Bildspeichers verbunden, während der Ausgang des Addierers an den Dateneingang des ersten Bildspeichers geführt ist.

Der Hauptzweck des bekannten Codierers ist der, die von einer Video-Datenquelle kommenden Videodaten möglichst mit geringem Informationsverlust in ein Signal mit möglichst geringer Bitrate umzucodieren. Bei diesem Vorgang werden zwei Codierungsprinzipien - daher der Name Hybrid-Codierer - angewendet:
Das Interframe-Prinzip,
bei dem die Korrelation (durch Differenzbildung der Blöcke) zwischen zeitlich aufeinanderfolgenden Videobildern (diese Bezeichnung wird hier für Voll- und Teilbilder verwendet) ausgenutzt wird und
das Intra-Frame-Prinzip,
bei dem die Korrelation der Videodaten (durch die Matrix-Transformation) innerhalb eines Videobildes ausgenutzt wird.

Die bekannte Anordnung ist speziell für die Übertragung von sogenannten Bewegtbildern gedacht, also von Folgen von Videobildern, die von Bild zu Bild unterschiedliche Daten enthalten, weil sich die abgebildeten Objekte relativ zur Videokamera bewegen. Um die Übertragungsbitrate zu reduzieren - z.B. auf 2 Mbit/s - enthält die oben erwähnte Vorverarbeitungseinheit auch eine Vorrichtung zur Unterabtastung der von einer Videokamera gelieferten Videobilder. Diese Videobilder bestehen aus 556 Zeilen und 720 Spalten, also aus 400 320 Bildpunkten. Nach der Unterabtastung ist die Zahl der Bildpunkte nur noch ein Viertel so groß wie die ursprüngliche Zahl der Bildpunkte. Damit ist automatisch ein Qualitätsverlust der von einer Videokamera gelieferten Videobilder verbunden.

Der Erfindung liegt die Aufgabe zugrunde, ausgehend von dem bekannten Bewegtbildcodierer einen Standbildcodierer der eingangs genannten Art anzugeben, bei dem - unabhängig von der Übertragungsbitrate - die von einer Videokamera kommenden Standbilder ohne nennenswerten Qualitätsverlust übertragen werden können.

Diese Aufgabe wird durch folgende Mittel gelöst:
1.1. einen ersten Vollbildspeicher, in dem die Daten aller Bildpunkte des zu übertragenden Standbildes gespeichert sind,
1.2. eine Auswahlschaltung, die die Kennlinie einstellt, nach der der Quantisierer die Quantisierung vornimmt,
1.3. mindestens eine Codierung und Übertragung aller im ersten Vollbildspeicher gespeicherten Daten, wobei die Auswahlschaltung für jede weitere Codierung und Übertragung eine Kennlinie auswählt, die einer feineren Quantisierung entspricht.

Eine vorteilhafte Ausgestaltung für den Fall, in dem im ersten Bildspeicher nur Teilbilder des im ersten Vollbildspeicher gespeicherten Standbildes gespeichert werden können, besteht darin, eine erste Selektionseinheit vorzusehen, die aus dem ersten Vollbildspeicher vorbestimmte Teilbilder des Gesamtbildes in vorbestimmter Reihenfolge zur Codierung und Übertragung ausliest, und daß eine zweite Selektionseinheit vorgesehen ist, die die Prädiktionswerte eines Teilbildes aus dem Bildspeicher ausliest, in einen zweiten Vollbildspeicher einschreibt und aus diesem die Prädiktionswerte des nächstfolgenden Teilbildes in den Bildspeicher überträgt.

Anhand eines Ausführungsbeispieles und der Figuren soll die Erfindung näher erläutert werden.

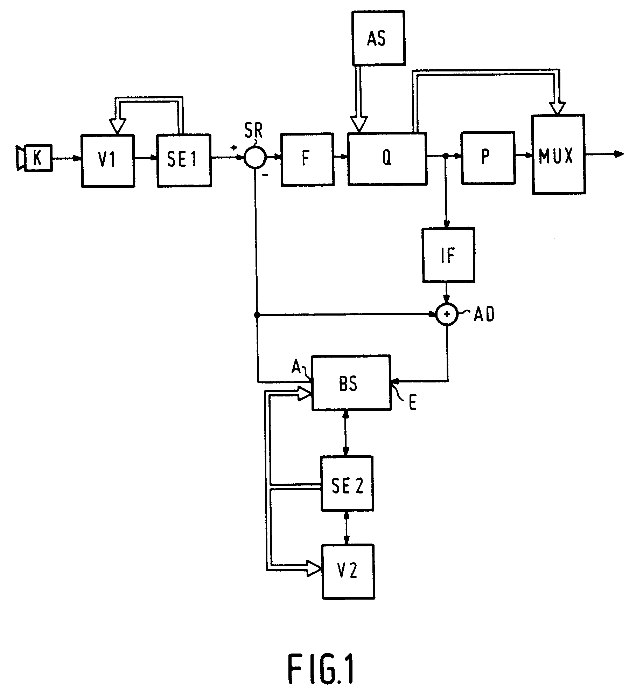

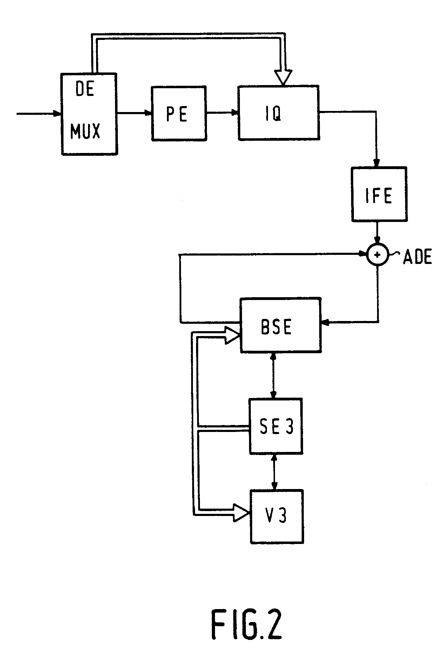

Figur 1 zeigt das Prinzipschaltbild eines Standbildcodierers mit erfindungsgemäßen Merkmalen und Figur 2 das Prinzipschaltbild eines erfindungsgemäßen Standbilddecodierers.

In den Codierer nach der Figur wird ein Standbild, also ein Bild, in dem die aufgenommenen Objekte relativ zu einer Kamera K ruhen, mit 556 Zeilen und 720 Spalten pro Bild aufgenommen und die Daten aller 400 320 Bildpunkte in einem Vollbildspeicher V1 gespeichert. Aus diesem Vollbildspeicher V1 werden mit Hilfe einer Selektionseinheit SE1 vorbestimmte Teilbilder des Vollbildes blockweise ausgelesen, und zwar handelt es sich bei den vorbestimmten Teilen jeweils um ein Viertel des gesamten Bildes. Auch die Reihenfolge, mit der die Teilbilder ausgelesen werden, ist vorbestimmt. Im vorliegenden Beispiel handelt es sich um die Reihenfolge, in der üblicherweise die Quadranten eines kartesischen Koordinatensystems durchnumeriert werden.

Jedes Viertelbild wird nun blockweise mit Hilfe weiterer Bausteine des Standbildcodierers, nämlich einem Subtrahierer SR, einer Transformationseinheit F, einem Quantisierer Q, einem Ausgangspuffer bestehend aus einem Pufferspeicher P und einem Multiplexer MUX sowie einer Rücktransformationseinheit IF, einem Addierer AD und einem Bildspeicher BS codiert und zu einem Leitungssignal mit konstanter Bitrate aufbereitet.

Vor Übertragung des ersten Viertelbildes ist der Bildspeicher BS, dessen Kapazität im vorliegenden Fall genau für ein Viertelbild ausreicht, gelöscht worden. Daher bestehen die Prädiktionswerte, die von einem Ausgang A des Bildspeichers BS dem Subtrahierer SR zugeführt werden, aus lauter Nullen. Am Ausgang des Subtrahierers SR erscheinen folglich die von der Selektionseinheit SE1 übertragenen und unveränderten Blöcke. Diese werden der Transformationseinheit F zugeführt. Die Einheit F nimmt mit ihnen eine flächenhafte Fourier-Transformation vor (vgl. hierzu die DE 36 13 343 A1) und überträgt die transformierten Blöcke an den Quantisierer Q. Bei der erstmaligen Übertragung eines Viertelbildes steuert eine Auswahlschaltung AS den Quantisierer Q so, daß er mit einer Quantisierungskennlinie arbeitet, die der gröbsten zur Verfügung stehenden Quantisierung entspricht. Die transformierten und quantisierten Blöcke werden dann in einen Pufferspeicher P eingeschrieben, mit anderer Geschwindigkeit wieder aus ihm ausgelesen und durch den Multiplexer MUX mit anderen sogenannten Nebeninformationen - z.B. mit einer Information, die die Einstellung des Quantisierers Q angibt - zu einem Leitungssignal konstanter Bitrate zusammengefaßt.

Das quantisierte Signal wird auch der Rücktransformationseinheit IF zugeführt, die die Wirkung der Einheit F rückgängig macht. Entsprechendes gilt für den Subtrahierer SR und den Addierer AD (wegen weiterer Einzelheiten vgl. die DE 36 13 343 A1), sowie für eine im Rückkopplungsweg nicht gezeigte Einheit und den Quantisierer Q.

Die über einen Eingang E des Bildspeichers BS eingeschriebenen und am Ausgang A ausgelesenen Blöcke sind die Prädiktionswerte für die zweite Übertragung der Viertelbilder. Ist jedoch das erste Viertelbild übertragen worden, so werden die im Speicher BS gespeicherten Prädiktionswerte durch eine weitere Selektionseinheit SE2 in einen weiteren Vollbildspeicher V2 und gleichzeitig die Prädiktionswerte des zweiten Viertelbildes aus dem Vollbildspeicher V2 in den Bildspeicher BS übertragen. Parallel dazu liest nun die Selektionseinheit SE1 Blöcke des zweiten Viertelbildes aus dem Vollbildspeicher V1 aus.

Sind alle vier Viertelbilder einmal übertragen worden, so erfolgt die nächste Übertragung des im Vollbildspeicher V1 gespeicherten Bildes wieder viertelbildweise, jedoch mit einer feineren Quantisierungskennlinie. Auf der Empfängerseite wird also entsprechend dem Codierungsprozeß das Standbild viertelbildweise aufgebaut und bei jeder neuen Übertragung - wegen der feineren Quantisierung - eine bessere Bildqualität erreicht. Die Übertragung des Standbildes ist abgeschlossen, nachdem die Übertragung mit der feinsten Quantisierungskennlinie erfolgt ist oder der Empfänger die Übertragung wegen ausreichender Qualität auf der Empfangsseite von sich aus abgebrochen hat.

Sollte während der Codierung eines Viertelbildes der Pufferspeicher P überzulaufen drohen, so wird - entsprechend der Übertragung bei Bewegtbildern - der Codierungsprozeß unterbrochen und mit der Codierung des gleichen Viertelbildes nach einer zehntel Sekunde (Kehrwert der Bildfolgefrequenz) fortgefahren, jedoch an der Stelle, an der die Codierung bei der vorangegangenen Übertragung unterbrochen worden ist.

Auf der Empfängerseite sind an dem bekannten Hybrid-Decodierer (vgl. die DE 36 13 343 A1) für die Übertragung von Standbildern keine Veränderungen vorzunehmen, sofern die Kapazität des Bildspeichers BS für die Speicherung eines Vollbildes in dem hier verwendeten Sinne ausreicht. Anderenfalls ist der Decodierer in ähnlicher Weise zu verändern wie der Codierer. Das soll nun anhand der Figur 2 erläutert werden.

Das übertragene Signal wird vor der Decodierung in einen Eingangspuffer eingelesen, der aus einem Demultiplexer DEMUX und einem Pufferspeicher PE besteht. Durch den Demultiplexer DEMUX werden Nebeninformationen von der übertragenen Gesamtinformation abgetrennt, z.B. die Einstellung des sendeseitigen Quantisierers. Diese Nebeninformation wird einer Einheit IQ zugeführt, die die Wirkung des sendeseitigen Quantisierers Q insofern rückgängig macht, als sie aus ihren Eingangsdaten Zahlen erzeugt, die die gleiche Darstellung haben wie die Eingangsdaten des senderseitigen Quantisierers Q.

Auf die Einheit IQ folgt eine Rücktransformationseinheit IFE, die die gleiche Wirkung hat wie die sendeseitige Einheit IF. Nach der Rücktransformation werden die übertragenen Daten einem Eingang eines Addierers ADE zugeführt, dessen Ausgang mit dem Eingang eines empfängerseitigen Bildspeichers BSE verbunden ist. Dessen Ausgang ist mit dem anderen Eingang des Addierers ADE verbunden. Das übertragene Vollbild wird viertelbildweise im Speicher BSE abgespeichert. Ist die Übertragung eines Viertelbildes beendet, so werden mit einer Selektionseinheit SE3 die Daten dieses Viertelbildes in einen empfängerseitigen Vollbildspeicher V3 eingeschrieben und gleichzeitig die bisher übertragenen Daten des nächstfolgenden Viertelbildes vom Vollbildspeicher V3 in den Bildspeicher BES übernommen. Die übertragenen Daten stehen dem Empfänger im Vollbildspeicher V3 für die Sichtbarmachung auf einem Bildschirm zur Verfügung.

## Patentansprüche

1. Prädiktiver Standbildcodierer mit einem Quantisierer (Q), dessen Kennlinie veränderbar ist, mit einem Ausgangspuffer (P,MUX), aus dem die codierten Bilddaten mit konstanter Bitrate ausgelesen und übertragen werden, sowie mit einem Subtrahierer (SR) und einem Bildspeicher (BS) für die Gewinnung von Prädiktionswerten,
gekennzeichnet durch
1.1. einen ersten Vollbildspeicher (V1), in dem die Daten aller Bildpunkte des zu übertragenden Standbildes gespeichert sind,
1.2. eine Auswahlschaltung (AS), die die Kennlinie einstellt, nach der der Quantisierer (Q) die Quantisierung vornimmt,
1.3. mindestens eine Codierung und Übertragung aller im ersten Vollbildspeicher (V1) gespeicherten Daten, wobei die Auswahlschaltung (AS) für jede weitere Codierung und Übertragung eine Kennlinie auswählt, die einer feineren Quantisierung entspricht.

2. Prädiktiver Standbildcodierer nach Anspruch 1,
dadurch gekennzeichnet,
daß für den Fall, in dem im Bildspeicher (BS) nur Teilbilder des im ersten Vollbildspeicher (V1) gespeicherten Standbildes gespeichert werden können, eine erste Selektionseinheit (SE1) vorgesehen ist, die aus dem ersten Vollbildspeicher (V1) vorbestimmte Teilbilder des Gesamtbildes in vorbestimmter Reihenfolge zur Codierung und Übertragung ausliest und daß eine zweite Selektionseinheit (SE2) vorgesehen ist, die die Prädiktionswerte eines Teilbildes aus dem Bildspeicher (BS) ausliest, in einen zweiten Vollbildspeicher (V2) einschreibt und aus diesem die Prädiktionswerte des nächstfolgenden Teilbildes in den Bildspeicher (BS) überträgt.

3. Standbilddecodierer mit einem Eingangspu£fer (DEMUX, PE), einer Rücktransformationseinheit (IFE), deren Ausgang mit einem ersten Eingang eines Addierers (ADE) verbunden ist, und mit einem Bildspeicher (BSE), dessen Ausgang mit einem zweiten Eingang und dessen Eingang mit dem Ausgang des Addierers (ADE) verbunden ist,
dadurch gekennzeichnet,
daß eine dritte Selektionseinheit (SE3) vorgesehen ist, die übertragene Teilbilder aus dem Bildspeicher (BSE) ausliest, in einen dritten Vollbildspeicher (V3) einschreibt und aus diesem die schon übertragenen Daten des nächstfolgenden Teilbildes in den Bildspeicher (BSE) überträgt.

## Claims

1. A predictive encoder for still pictures, comprising a quantizer (Q) whose characteristic curve is variable, an output buffer (P, MUX) from which the encoded picture data are read and transmitted at a constant bit rate, and a subtracter (SR) and a picture memory (BS) for obtaining prediction values, characterized by
1.1. a first frame memory (V1) in which the data of all pixels of the still picture to be transmitted are stored,
1.2. a selection circuit (AS) adjusting the characteristic curve after the quantizer (Q) performs the quantizing operation,
1.3. at least an encoding and transmission of all data stored in the first frame memory (V1) while for each further encoding and transmission the selection circuit (AS) selects a characteristic curve corresponding to a more refined quantizing operation.

2. A predictive encoder for still pictures as claimed in Claim 1, characterized in that for the case in which only fields of the still picture stored in the first frame memory (V1) can be stored in the picture memory (BS), a first selection unit (SE1) is provided which reads predetermined fields of the overall picture from the first frame memory (V1) in a predetermined sequence for the purpose of encoding and transmission, and in that a second selection unit (SE2) is provided which reads the prediction values of a field from the picture memory (BS), writes them in a second frame memory (V2) and transfers the prediction values of the next field from this memory to the picture memory (BS).

3. A still picture decoder comprising an input buffer (DEMUX, PE), an inverse transform unit (IFE) whose output is connected to a first input of an adder (ADE), and a picture memory (BSE) whose output is connected to a second input and whose input is connected to the output of the adder (ADE), characterized in that a third selection unit (SE3) is provided which reads transmitted fields from the picture memory (BSE), writes them in a third frame memory (V3) from which it transfers the already transmitted data of the next field to the picture memory (BSE).

## Revendications

1. Codeur prédictif d'image immobile, comportant un quanàficateur (Q), dont la caraetéristique peut être modifiée, un tampon de sortie (P, MUX) duquel les données d'image codées sont extraites et transmises à un débit binaire constant, ainsi qu'un soustracteur (SR) et une mémoire d'images (BS) pour l'obtention de valeurs prédictives, caractérisé en ce que :
1.1. une première mémoire d'images complètes (V1), dans laquelle les données de tous les points d'image de l'image immobile à transmettre sont mémorisées;
1.2. un circuit de sélection (AS), qui règle la caractéristique selon laquelle le quantificateur (Q) effectue la quantification, et
1.3. au moins un codage et une transmission de toutes les données mémorisées dans la première mémoire d'images complètes (V1), le circuit de sélection (AS) choisissant pour chaque autre codage et chaque autre transmission une caractéristique qui correspond à une quantification plus fine.

2. Codeur prédictif d'image immobile selon la revendication 1, caractérisé en ce que, dans le cas où, dans la mémoire d'images (BS), seules des images partielles de l'image immobile mémorisée dans la première mémoire d'images complètes (V1) peuvent être mémorisées, il est prévu une première unité de sélection (SE1), qui extrait de la première mémoire d'images complètes (V1) des images partielles prédéterminées de l'image complète dans un ordre prédéterminé pour le codage et la transmission, et en ce qu'il est prévu une deuxième unité de sélection (SE2), qui extrait de la mémoire d'images (BS) les valeurs prédictives d'une image partielle, les transcrit dans une deuxième mémoire d'images complètes (V2) et transmet à partir de celle-ci les valeurs prédictives de l'image partielle immédiatement suivante à la mémoire d'images (BS).

3. Décodeur d'image immobile comportant un tampon d'entrée (DEMUX PE), une unité de transformation inverse (IFE), dont la sortie est connectée à une première entrée d'un additionneur (ADE), et une mémoire d'images (BSE), dont la sortie est connectée à une deuxième entrée et dont l'entrée est connectée à la sortie de l'additionneur (ADE), caractérisé en ce qu'il est prévu une troisième unité de sélection (SE3), qui extrait les images partielles transmises de la mémoire d'images (BSE), les transcrit dans une troisième mémoire d'images complètes (V3) et transmet à partir de celle-ci les données déjà transmises de l'image partielle suivant immédiatement à la mémoire d'images (BSE).
